# EUROPEAN PATENT APPLICATION

(11) **EP 4 703 828 A1**
(43) Date of publication of application: **04.03.2026**
(21) Application number: 25199155.0
(22) Date of filing: 29.08.2025
(51) Int. Cl.: G05B 23/02, B64D 45/00, B64F 5/60

(54) **METHOD OF MONITORING AN AIRCRAFT ENGINE**

(30) Priority: 29.08.2024 IN 202411065361
(71) Applicant: PRATT & WHITNEY CANADA CORP., Longueuil, Québec J4G 1A1 (CA)
(72) Inventor: PENNAPAREDDY, Swathi, (01BE5) Longueuil, J4G 1A1 (CA)
(74) Representative: Dehns

(57) **Abstract**

A method of monitoring operation of an aircraft engine (10) includes, during operation of the aircraft engine (10), monitoring a parameter associated with the aircraft engine (10) using one or more sensors (22). In response to determining that one or more values of the parameter are indicative of a foreign object damage (FOD) event of a first severity level to the aircraft engine (10), communicating data pertaining to the FOD event of the first severity level in accordance with a first communication scheme (50a) assigned to the first severity level. In response to determining that one or more values of the parameter are indicative of FOD event of a second severity level to the aircraft engine (10), the second severity level being higher than the first severity level, communicating data pertaining to the FOD event of the second severity level in accordance with a second communication scheme (50b) assigned to the second severity level.

## Description

### TECHNICAL FIELD

The disclosure relates generally to a method of operating an aircraft engine and, more particularly, to foreign object damage (FOD) monitoring and detection.

### BACKGROUND OF THE ART

One challenge in the design and operation of aircraft engines is the management of what became commonly referred to as "foreign object damage" or FOD. FOD may have various effects on the operation of an aircraft engine, and these effects may be considered as having a lower or higher level of severity based on various considerations. There always remains room for improvement in an effort to reduce frequency of inspections and unscheduled downtime due to FOD.

### SUMMARY

According to an aspect of the present invention, there is provided a method of monitoring operation of an aircraft engine, the method comprising: during operation of the aircraft engine, monitoring a parameter associated with the aircraft engine using one or more sensors; in response to determining that one or more values of the parameter are indicative of a foreign object damage (FOD) event of a first severity level to the aircraft engine, communicating data pertaining to the FOD event of the first severity level in accordance with a first communication scheme assigned to the first severity level, the first communication scheme specifying at least a first channel to be used and a first data type to be communicated over the first channel; and in response to determining that one or more values of the parameter are indicative of FOD event of a second severity level to the aircraft engine, the second severity level being higher than the first severity level, communicating data pertaining to the FOD event of the second severity level in accordance with a second communication scheme assigned to the second severity level, the second communication scheme specifying: a second channel in addition to the first channel, the second channel not used in the first communication scheme; and/or a second data type to be communicated over the first channel, the second data type not communicated over the first channel in the first communication scheme.

According to another aspect of the present invention, there is provided an aircraft engine comprising: a sensor; a controller including a processor and a non-transitory machine-readable memory operatively connected to the processor, and (the memory) storing: specifications for a plurality of severity levels of foreign object damage (FOD) events; multiple communication schemes for the FOD events, each communication scheme of the multiple communication schemes having a selected combination of: one or more channels; and one or more data types to be communicated over the one or more channels; and instructions executable by the processor to cause the processor to: measure one or more values of a parameter of the aircraft engine using the sensor; detect an FOD event occurrence of based on the one or more values, and assign one of the plurality of severity levels based on the one or more values; and communicate data pertaining to the FOD event occurrence in accordance with a communication scheme selected from the multiple communication schemes based on the assigned one of the plurality of severity levels.

According to another aspect of the present invention, there is further provided a method of operating an aircraft engine, the method comprising: measuring one or more values of a parameter of the aircraft engine using one or more sensors; detecting an occurrence of a foreign object damage (FOD) event having one of a plurality of severity levels based on the one or more values; and communicating data pertaining to the FOD event occurrence in accordance with a communication scheme including selecting the communication scheme from multiple communication schemes based on the severity level, each communication scheme of the multiple communication schemes having a selected combination of: one or more channels; and one or more data types to be communicated over the one or more channels.

The methods and aircraft engine as defined above and described herein may further include one or more of the following features, in whole or in part, and in any combination.

Optionally, and in accordance with the above, the first channel is a flight crew interface and the second channel is a wireless communication channel.

Optionally, and in accordance with any of the above, the second channel is a data link.

Optionally, and in accordance with any of the above, the second channel is a health report (or a health monitoring channel).

Optionally, and in accordance with any of the above, the second channel is a wireless communication channel between an aircraft bearing the aircraft engine and airport authorities.

Optionally, and in accordance with any of the above, communicating in accordance with the second communication scheme includes including a recommendation as to next steps.

Optionally, and in accordance with any of the above, the method includes generating the recommendation as to next steps using a generative neural network and the one or more values.

Optionally, and in accordance with any of the above, the method includes generating the recommendation as to next steps based on data pertaining to at least one of past engine events and outcomes to past engine events.

Optionally, and in accordance with any of the above, the sensor is an accelerometer and the second specifications specify vibration amplitudes higher than vibration amplitudes defined in the first specifications.

Optionally, and in accordance with any of the above, the method includes storing the one or more values in a non-transitory memory when the FOD event is detected.

Optionally, and in accordance with any of the above, communicating includes displaying the severity level of the FOD event on a cockpit display.

Optionally, and in accordance with any of the above, the communication scheme specifies a first channel and a second channel, wherein the first channel is a flight crew interface connecting with a cockpit display, and the second channel is a wireless communication channel.

Optionally, and in accordance with any of the above, the second channel is a wireless communication channel between an aircraft bearing the aircraft engine and airport authorities.

Optionally, and in accordance with any of the above, the second channel is a data link.

Optionally, and in accordance with any of the above, the second channel is a health report (or a health monitoring channel).

Optionally, and in accordance with any of the above, the instructions to communicate data include instructions to display the severity level of the FOD event on a cockpit display.

Optionally, and in accordance with any of the above, one of said data types is a recommendation as to next steps.

### BRIEF DESCRIPTION OF THE DRAWINGS

Reference is now made to the accompanying figures in which:
Fig. 1 is a schematic cross-sectional view of an aircraft engine;
Fig. 2 is a block diagram of the aircraft engine of Fig. 1;
Fig. 3 is a flow chart of a method of operating the aircraft engine of Fig. 1;
Fig. 4 is a block diagram of another example of an aircraft engine;
Fig. 5 is a flow chart of a method of operating the aircraft engine of Fig. 4;
Fig. 6A, 6B and 6C are schematic diagrams representing communication schemes corresponding to three different severity levels, namely low, medium and high, respectively;
Fig. 7 is a flow chart of a method of operating the aircraft engine of Fig. 4; and
Fig. 8 is a block diagram of a computer.

### DETAILED DESCRIPTION

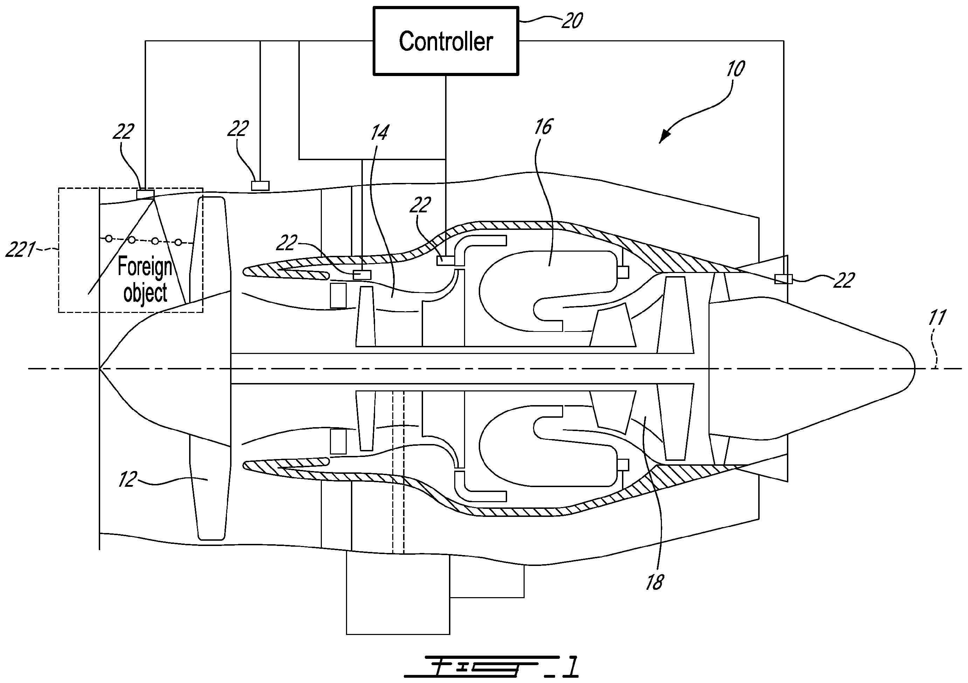

Fig. 1 illustrates an aircraft engine 10 of a type preferably provided for use in subsonic flight, generally comprising in serial flow communication a fan 12 through which ambient air is propelled, a compressor section 14 for pressurizing the air, a combustor 16 in which the compressed air is mixed with fuel and ignited for generating an annular stream of hot combustion gases around the engine axis 11, and a turbine section 18 for extracting energy from the combustion gases.

In the embodiment presented in Fig. 1, the aircraft engine 10 is presented as one possible example of aircraft engine, which is specifically of the turbofan engine type in this example. Other types of aircraft engines include turboprop, turboshaft, auxiliary power units, and hybrid aircraft engines which can combine one or more electric machines to one or more heat engines, to name some examples. A method of operating an aircraft engine such as described below can apply to turbofan engines, other types of aircraft engines referred to above, or yet other types of engines depending on the embodiment.

Aircraft engines are subject to occurrences of "foreign object damage", sometimes referred to as "foreign object damage" or "FOD", for short. FOD refers to the presence of one or more solid objects which comes to occupy a location from which it was absent at the time of engine design or engine delivery, and which may affect engine performance. FOD may come from an external source, such as a bird or other foreign object being aspired into an air breathing engine. FOD may come from an internal source, such as a cracked blade portion, loosened fastener, broken gasket, or other component which was initially part of the engine itself, and which may have become displaced from its original, intended configuration at a given point during operation of the aircraft engine, such as may occur due to a variety of reasons.

FOD events may have different severity levels. For the purpose of this specification, FOD events of a same type having different severity levels can be considered to form different FOD events having corresponding severity levels.

Confirmed or potential occurrences of FOD events may need to be taken into consideration in association with an engine maintenance schedule. While on one hand, it can be desired to perform maintenance more frequently in a manner to address the potential effects of FOD on aircraft engine operation, on the other hand, performing maintenance is associated to both maintenance costs, and to engine (and aircraft) downtime, which engine owners typically wish to minimize while meeting all requirements associated to good engine performance.

An aircraft engine 10 can have a controller 20. An aircraft engine 10 can have a plurality of sensors 22 which may be used by the controller 20 to acquire (e.g., measure) values of one or more parameters, which can evolve over time such as during different segments of the engine's operating envelope. Engine sensors may acquire values of parameters which may be indicative of FOD. FOD specifications, or simply specifications for short, may be defined for FOD events, and potential FOD event may be raised or confirmed based on measured values meeting associated FOD specifications. The amount of data collected or otherwise acquired in relation with an FOD event can be large. Artificial intelligence (AI) such as deep learning (DL) can be useful to process the data. It may be difficult to comprehend the large amount of data when not processed. Different persons associated to the management of an FOD event may need different types of data. Accordingly, different communication schemes involving either more or less types of data, and communications on more or less channels, depending on a severity level of the FOD, may be useful.

For example, a lidar unit, camera, or other sensor type may be used to measure one or more values associated to one or more parameters associated to detecting a presence or a passage of foreign object damage (FOD) in one or more air flow areas of the aircraft engine 10. Alternately, or concurrently, a lidar unit, camera, or other sensor type may be used to measure one or more values associated to one or more parameters associated to one or more dimensions or one or more tridimensional images of one or more internal portions of the aircraft engine 10. As another example, one or more temperature, torque and/or pressure sensors may be used to measure one or more values of one or more parameters of temperature and/or pressure at one or more areas of the aircraft engine 10. As yet another example, one or more vibration sensors (e.g., accelerometer) may be used to measure values of one or more parameters associated to vibrations at one or more areas of the aircraft engine 10, such as an amplitude spectrum of vibrations spanning a given frequency band, at one or more locations of the aircraft engine 10 for instance. Building on this explanation, sensors 22 can be used to measure one or more values of various parameters such as dimensions, tridimensional geometry, FOD detection, temperature, pressure, amplitude and/or frequency of vibration, etc. Sensors 22 can provide outputs which can be received as inputs by the controller 20.

The aircraft engine 10 can have an FOD detection system 221 including a sensor 22 in the form of a lidar sensor. The FOD detection system 221 may be used to detect the presence of foreign objects in the gas path and/or to acquire dimensions or digital representations of a tridimensional surface shape. However, the FOD sensitivity may be limited, and some smaller particles or objects or dents may not be detectable by the FOD detection system 221. Moreover, the FOD detection system 221 may generate false alarms.

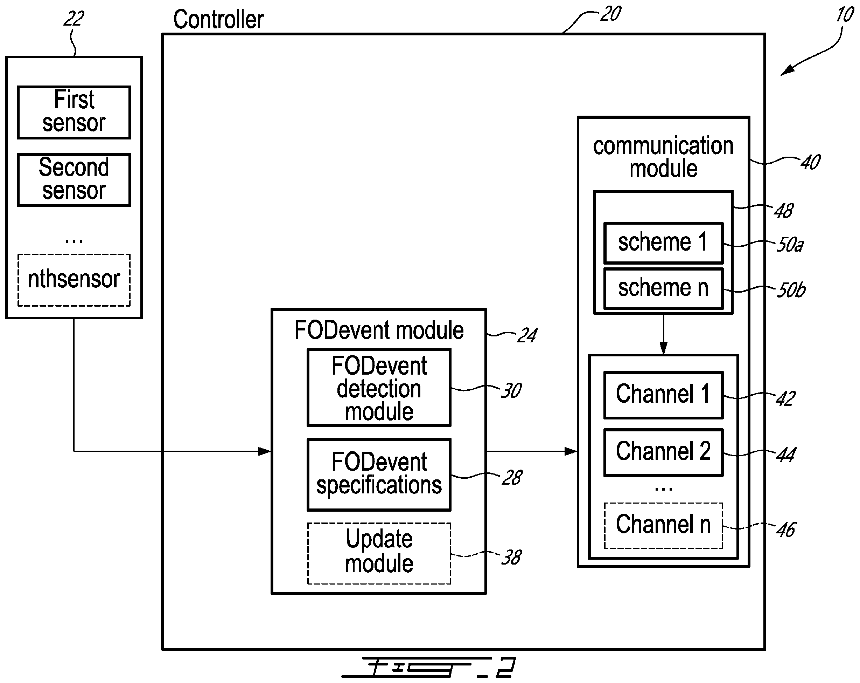

An example controller 20 is presented in greater detail in Fig. 2. The controller 20 can include one or more computers and be operable to perform functions such as processing data received from the sensors 22 based on FOD specifications 28. The functions may be performed in an individual manner by a single computer, or in a collaborative manner between more than one computer or processor. The functions can be enabled by hardware, or by a combination of hardware and software. The hardware, or combination of hardware and software associated to individual functions will be referred to as modules in this specification for ease of reference.

In the example presented in Fig. 2, the controller 20 can be seen to have different groups functions including here a first group of functions which will be referred to as a FOD event module 24, and a second group of functions which will be referred to as a communications module 40. Some of the underlying functions are optional and presented in Fig. 2 solely to provide details one of various possible examples. The FOD event module 24 and the communications module 40 will now be detailed for illustrative purposes.

The controller 20 has an FOD event module 24. The FOD event module 24 can include definitions of FOD events. These definitions of FOD events may be referred to herein as FOD event specifications 28. FOD event specifications 28 can specify different threshold values, or different ranges of values, for a given parameter, corresponding to different severity levels for the FOD event. The FOD event detection module 30 can perform the function of determining whether one or more values sensed by the sensors 22 corresponds to an occurrence of a FOD event based on the FOD event specifications 28. Different FOD event specifications 28 can be associated to a same FOD event type, but of different severity levels. In some embodiments, FOD event specifications 28 based on a single parameter can be associated to a same FOD event. For example, one or more accelerometer can measure values of vibration. Different vibration amplitudes, for instance, can be associated to impacts of different severity levels.

The reading of values of a parameter by the one or more associated sensor which fall within the specifications of a corresponding severity level of the FOD event type can lead to the communication of the FOD event of the corresponding severity level by a communication module 40. As will be detailed below, the communication module 40 can have more than one communication channel, 42, 44, 46, each of which may allow communicating associated information pertaining to the FOD event to a corresponding, different party. For instance, a first channel 42 may be used to communicate information pertaining to the FOD event to the flight crew, a second channel 44 may be used to communicate information pertaining to the FOD event to an engine support entity, such as an original equipment manufacturer (OEM) and/or a maintenance repair overhaul (MRO) facility, another channel 46 may be used to communicate information pertaining to the FOD event to an event management entity such as an air traffic controller, airport authority, safety authority, etc.

In some cases, different communication schemes 50a, 50b can be used when communicating FOD events of different severity levels. The selection of a different communications scheme 50a, 50b, for FOD events of different severity levels, can be referred to herein as modulating the communication scheme, and can be performed by a selector 48. Different communication schemes 50a, 50b can include more or less data types of data pertaining to the FOD event over one or more channel 42, 44, 46. For instance, in some embodiments, one or more of the channels 42, 44, 46 may be used to communicate one or more data types only when a FOD event of a higher severity level is detected, and may remain silent when a FOD event of a lower severity level is detected. This latter example corresponds to a scenario where no data type is communicated over that channel when the FOD event of the lower severity level is detected, and where one or more data type is communicated over that channel when the FOD event of the higher severity level is detected.

Accordingly, information pertaining to the FOD event may be communicated to more, or less channels depending on the severity level associated to the FOD event. A selector 48 of the communication module 40 can perform the function of determining which communication scheme will be used, which can include determining over which channel information pertaining to a given FOD event will be communicated, and which types of data will be communicated over which ones of the one or more channels. For instance, if FOD events are classified as either low, medium, or high severity, the FOD events of low severity may only be communicated to the channel 42 dedicated to the flight crew, whereas information pertaining to FOD events of medium severity may be communicated to both the first channel 42 and the second channel 44, and FOD events of high severity may be communicated to yet a further channel 46, or to all channels, for instance.

In some cases, the information about the FOD event of a given severity level, which is communicated via two or more channels 42, 44, 46, may be different from one channel to another. The selector 48 can perform the function of determining which communication scheme will be used, which can include determining which type(s) of information is provided over each channel. For instance, in the case where a given FOD event is detected, information pertaining to the ordering of replacement parts, and/or information allowing to schedule and/or perform maintenance, may be communicated over the channel 44 dedicated to the engine support entity(ies), whereas such information may not be deemed relevant to other channels, and not be communicated to other channels. The different types of information about the FOD event may be made available to the communication module 40 by the FOD event module 24, and/or from another source, such as other data accessible to the controller 20. In some embodiments, information about the FOD event may be made available to the communication module 40 by a digital twin module 26, which may track information about the engine 10 as the engine 10 evolves over time, or from another database which can be built from data available from other engines of the same make and model, for instance.

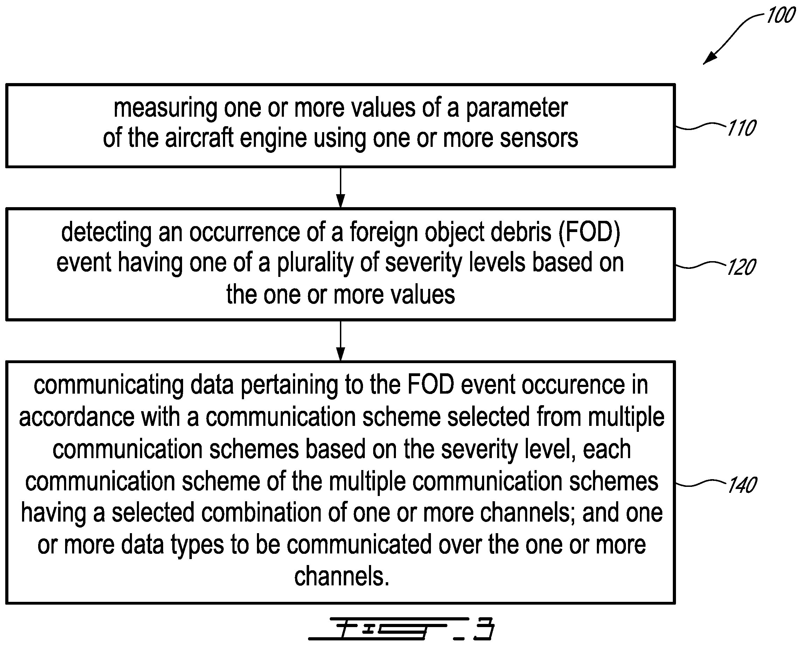

Referring to Fig. 3, in an example embodiment, a method 100 of operating an aircraft engine 10 can include : measuring 110 one or more values of one or more parameters of the aircraft engine using one or more sensors; detecting 120 an occurrence of a foreign object damage (FOD) event having one of a plurality of severity levels based on the one or more values; and communicating 140 data pertaining to the FOD event including more or less data types over a given one of one or more channels, or communicating over more or less of the one or more channels, depending on the severity level.

Depending on the embodiment, the scenario where the one or more values meet the specification can directly lead to a determination that the corresponding FOD event, of the corresponding severity level, has occurred, and the occurrence of the FOD event can be communicated to the communication module, which can determine which information about the FOD event is to be communicated over which one(s) of the channels.

Depending on the severity level, the communication may be used to schedule maintenance or to expedite an already scheduled maintenance.

In another example, a certain amplitude of vibration in a certain frequency band at a given location in the aircraft engine 10 may be associated to a FOD event such as broken fan blade or broken compressor blade, for instance. Detecting vibration in excess of a given threshold, in the corresponding frequency band and the corresponding location, can correspond to a scenario where the one or more values of the first parameter meets the first specifications, and can lead to the communication of the FOD event.

In some cases, the specifications about the FOD event may be acquired based on a simulation based on a digital engine model of the aircraft engine. For instance, one or more sensors 22 can provide values for one or more parameters indicative of current operating conditions of the aircraft engine 10. The digital engine model may include information pertaining to an exact geometry of the aircraft engine 10 (including, say, a dent in a duct detected using a lidar unit which deviates from the "as shipped" geometry), and the expected engine performance may, to a certain degree, be affected by the exact geometry of the aircraft engine 10. The simulation can calculate values associated based on the sensed current operating conditions, and based on the exact geometry information included in the digital engine model. Accordingly, the information may be specific to a very specific engine (e.g., serial no), as opposed to being generic to an engine make and model. Similarly, some performance or vibration characteristics, to name two examples, may differ to a certain extent between engines of a given make and model. Such variability can be associated to variations within dimensional tolerances during construction or repurposing, and/or due to factors such as wear over the life of the engine. The digital engine model can have one or more components which may reflect such performance or vibration characteristics of individual engines. Using a more individualized digital engine model as a source of the information may allow to facilitate the management of the FOD event, and may alternately allow to achieve a higher level of accuracy in diagnosing a given FOD event, than if using data pertaining generically to a make and model of an engine.

Depending on the embodiment, the FOD event specifications 28 which serve to the detection of an FOD event of a given severity level do not necessarily refer to instantaneous values. In some embodiments, the specifications may rather specify an evolution of one or more values of an associated (one or more) parameter over time.

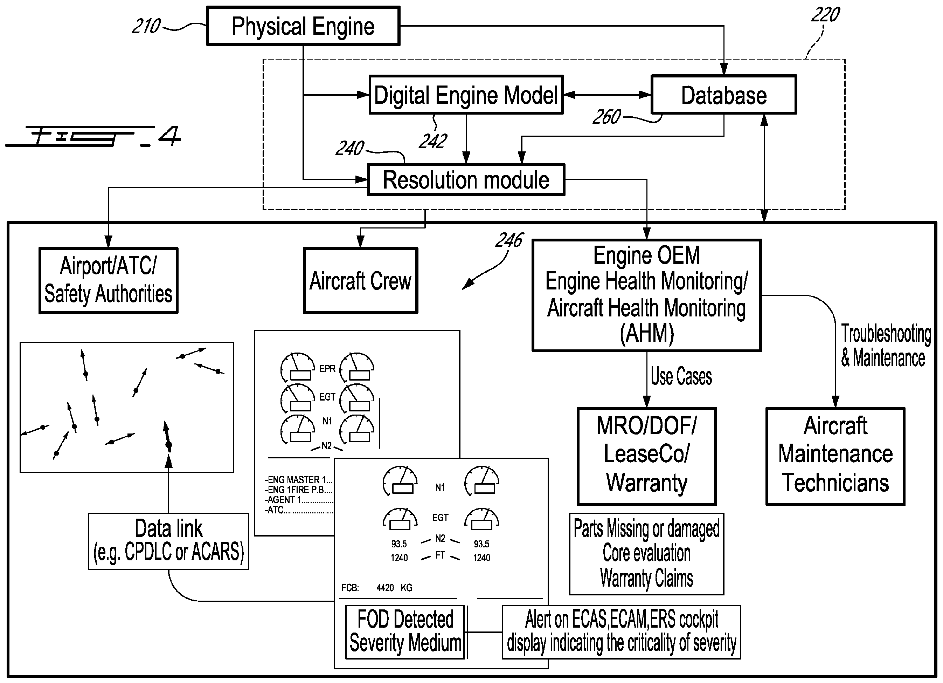

Turning now to Fig. 4, a block diagram of one example embodiment is presented. In this example, the physical engine 210 has sensors 222 (which can include the FOD detection system 221) and a controller 220. The controller 220 can have one or more non-transitory memories storing data such as a database 260 which may include baseline data such as feature data, pass-off data of new or as-overhauled engine, and/or performance data, and a digital twin. In this example, the digital engine model 242 can include a vibration digital engine model. Data from the sensors 222 can be fed to the database 260. A resolution module 240 may be included, which may include functionalities associated to the FOD event module 24 and of the selector 48 discussed previously. The resolution module 240 can include an Al-driven resolution model which can determine the presence or absence of FOD events of different severity levels and drive communication accordingly. The resolution module 240 may be operatively connected to one or more a display / interface 246 through corresponding ones of one or more channels.

The digital engine model 242 can be a pre-built model of the physical engine 210 which contains information of conditions of the engine, geometry/features, and performance metrics of the engine model. The digital engine model 242 can be updated. The digital engine model 242 can understand geometric details of the individual engine such as mild folds or small dents. The digital twin 242 can use artificial intelligence (AI) and deep learning (DL) to be continuously updated with real-time data. The resolution module 240 can facilitate the communication of FOD event data to one or more actions, and can provide recommendations on action items and next steps using a machine learning (ML) algorithm. The FOD detection scheme can be based on the digital twin, lidar detection, vibration detection a combination thereof, etc. The channels can include a first channel to flight crew, a second channel to OEM/MRO, and a third channel to airport/ATC/safety authorities. Upon detection of an FOD event, including detection of a missing part, the model can process the FOD data tand data from the detection system to determine the severity level of the FOD event along with recommendations of next steps for each channel. Severity levels can be defined as green (low severity), amber (medium severity), and red (high severity) for example. Depending on the severity level, different amounts of data can be communicated over different channels.

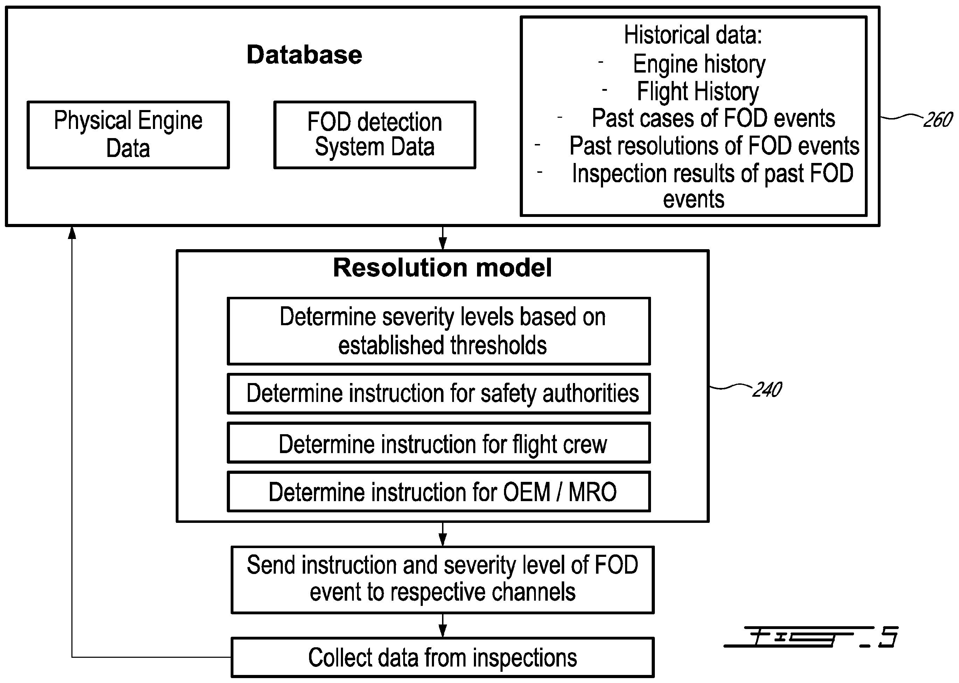

A block diagram showing greater detail about the database 260 and the resolution model 240 of Fig. 4 is presented at Fig. 5. The input data to the resolution model 240 may include the physical engine data, FOD detection system data, historical data, relevant safety guidelines, etc. The historical data may include: engine history, flight history, past cases of FOD events, past resolutions of FOD events, inspection results of past FOD events. With the input data, the model can determines the severity level of the FOD event based on established thresholds. Instructions to safety authorities, flight crew, and/or OEM/MRO can be determined. Instructions can be communicated through the respective channels. Data from the results of the actions taken / resolution of the event can be sent back to the database to update historical data as well as the established thresholds.

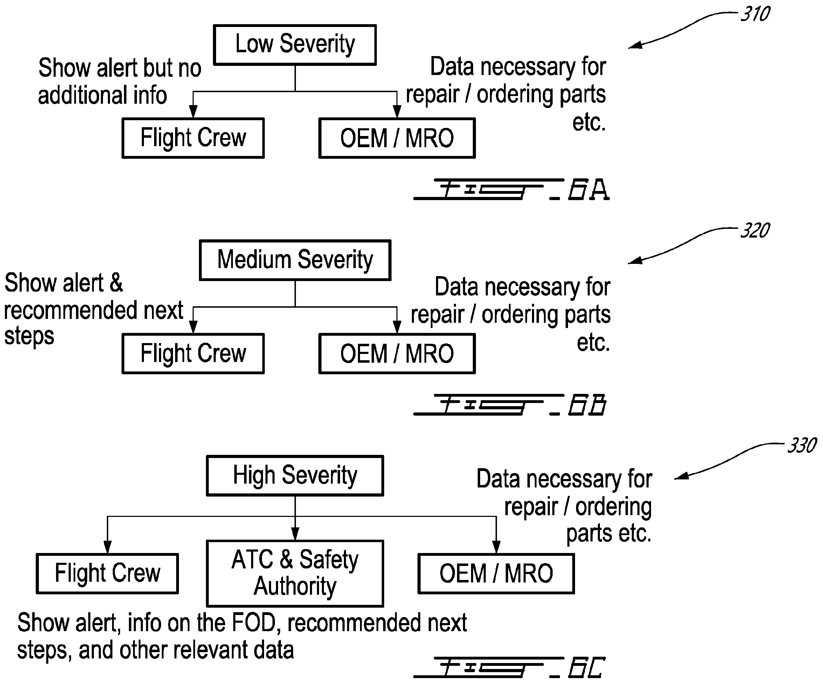

Figs 6A, 6B and 6C presents three example communication schemes including a first communication scheme 310, a second communication scheme 320, and a third communication scheme 330. In this example, the first communication scheme 310 is associated to an FOD event of a low severity, the second communication scheme 320 is associated to an FOD event of a medium severity, and the third communication scheme 330 is associated to an FOD event of a high severity. The first communication scheme 310 specifies communication over two channels, including a first channel directed to flight crew, and a second channel directed to OEM/MRO. The first communication scheme 310 specifies that a low severity level alert data type is to be communicated over the first channel, with no additional information, and that data necessary for repair/ordering parts is communicated over the second channel.

The second communication scheme 320 also specifies communication over two channels. In this embodiment, the second communication scheme 320 differs from the first communication scheme 310 in that an additional data type, namely recommended next steps, is communicated over the first channel, in addition to showing the alert. The third communication scheme specifies communication over three channels, including a communication channel with the ATC & Safety Authority in addition to the two channels mentioned above. The third communication scheme 330 also differs from the second communication scheme in that more information is communicated over the channel with the flight crew, namely information about the FOD and any other relevant data.

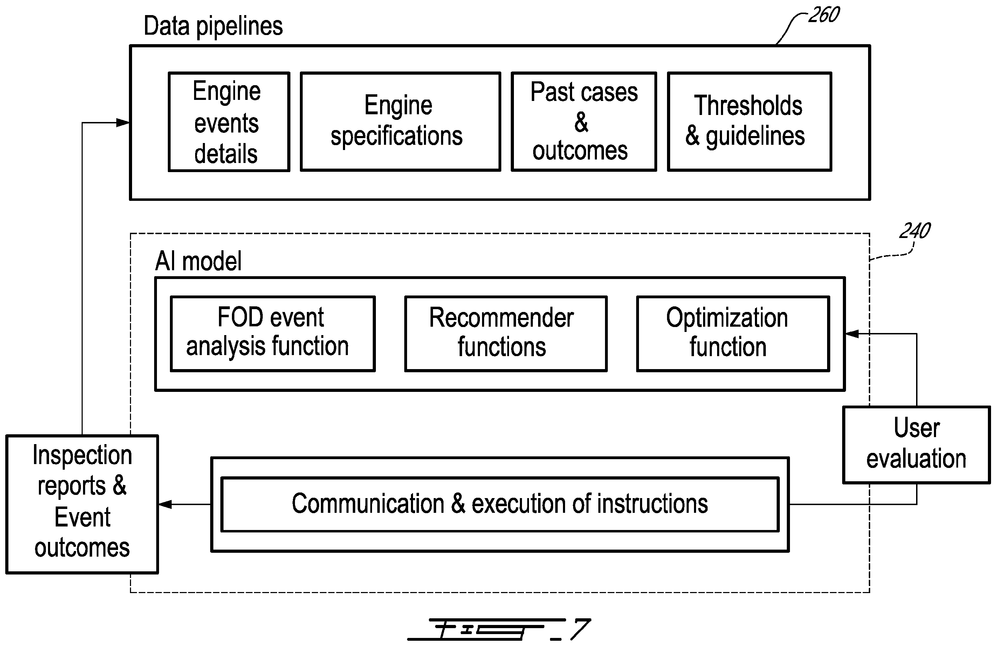

As presented in further detail in Fig. 7, the database 260 can be continuously updated based on data pipelines, and several functions can be powered by an Al model, namely FOD event analysis, a recommendation function, and an optimization function. Input data can include : engine event details, engine specifications, thresholds/ guidelines, and historical data (past events and outcomes). The Al model can analyze the input data to determine the severity level of the FOD event based on established specifications/thresholds. The recommender function can then generates possible plans of action. The optimization function can analyze the possible plans of actions and determines ranking by comparing to guidelines, satisfaction of previous outcomes, etc. The Al model can use a combination of a plurality of neural networks and weighting functions. The FOD analysis function and optimization function can use neural networks such as RNNs, VAEs, etc. The recommendation function can use generative neural networks such as GNNs, GANs, or VAEs.

In this example, referring back to Fig. 4, the first channel can communicate to the flight crew via wired or wireless connections leading to the cockpit displays 246 (e.g., via ECAS/ ECAM/ERS, depending on aircraft manufacturer). FOD events occurrences can be displayed with the severity/ criticality level of the event each with a different colour. For low severity level, flight crew can be shown a green alert that indicates a low severity with no additional info. For medium severity, an amber alert (medium severity) is shown along with recommended next steps. For high severity, the red alert is shown along with greater detail on FOD event and recommended next steps. Resolution and next steps for the FOD event can be sent back to database model such that severity level assessment and instructions are improved. Data can be collected after actions are carried out to establish new thresholds for next iteration of severity assessment and instructions.

In this example, still referring to Fig. 4, the second channel can communicate to the OEM/MRO via a wireless telecommunications protocol. The second channel can be based on an existing health monitoring channel such as engine health monitoring channel or aircraft health monitoring channel. The controller 220 can take info live of damaged parts or missing parts during each event to immediately contact maintenance/overhaul such that parts are already available upon aircraft arrival and process is initiated prior to aircraft landing. The controller 220 can communicate info to one or more relevant parties with clear action items / actions taken such that facilitation of maintenance or repair is smooth. For all severity levels, relevant information for part repair and part ordering can be transferred. With an increasing level in severity, more data and greater complexity in data can be communicated. The model can make maintenance recommendations based on part availability, warranty claims, severity of damage, etc. Inspection reports and steps taken for resolution for the FOD event can be sent back to database model such that severity level assessment and instructions are improved. Data can be collected after actions are carried out to establish new thresholds for next iteration of severity assessment and instructions.

In this example, still referring to Fig. 4, the third channel can communicate with the ATC / Safety Authority via a wireless telecommunications protocol. After a FOD event is detected, relevant info can be sent to the authorities such as airport, air traffic controllers (ATC), safety authorities etc. An example visual is as shown in Fig. 4, where flights with no issues (e.g., flights where no FOD event, or mild FOD events such as FOD events of only low or moderate severity level) are identified as green markers on a map, and a flight with a reported higher severity FOD event is identified as a red marker on the map along with details and relevant data on FOD event and recommended next steps. The display can shows info across the board (communication with flight crew and OEM etc. and the progress on action items from those channels). The third channel can communicate via a datalink (CPDLC) between safety authorities and flight crew. Resolution and next steps for the FOD event are sent back to database model such that severity level assessment and instructions are improved. Data can be collected after actions are carried out to establish new thresholds for next iteration of severity assessment and instructions.

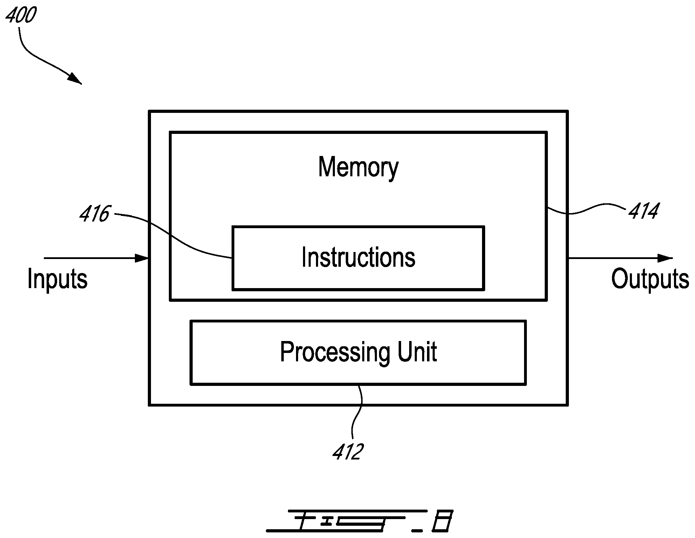

Referring to Fig. 8, it will be understood that the expression "computer" 400 as used herein is not to be interpreted in a limiting manner. It is rather used in a broad sense to generally refer to the combination of some form of one or more processing units 412 and some form of memory system 414 accessible by the processing unit(s). The memory system 414 can be of the non-transitory type. The use of the expression "computer" 400 in its singular form as used herein includes within its scope one or more processing units 412 working to perform a given function.

The computer(s) 400 or computing devices of the controller 20, 220, may be the same or different types of devices. Note that the controller 20, 220 can be implemented as part of a full-authority digital engine controls (FADEC) or other similar device, including electronic engine control (EEC), engine control unit (ECU), electronic propeller control, propeller control unit, and the like. In some embodiments, the controller is implemented as a Flight Data Acquisition Storage and Transmission system, such as a FASTTM system. The controller may be implemented in part in the FASTTM system and in part in the EEC. Other embodiments may also apply.

The computer(s) 400 comprises a processing unit 412 and a memory 414 which has stored therein computer-executable instructions 416. The processing unit 412 may comprise any suitable devices configured to implement a method such that instructions, when executed by the computer(s) or other programmable apparatus, may cause the functions/acts/steps performed to control the mode of operation of the engine to be executed. The processing unit may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 414 may comprise any suitable known or other machine-readable storage medium. The memory 414 may comprise non-transitory computer readable storage medium, for example, but not limited to, an electronic, magnetic, optical, electromagnetic, infrared, or semiconductor system, apparatus, or device, or any suitable combination of the foregoing. The memory 414 may include a suitable combination of any type of computer memory that is located either internally or externally to device, for example random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory 414 may comprise any storage means (e.g., devices) suitable for retrievably storing machine-readable instructions 416 executable by processing unit 412.

The methods and systems for controlling the engine described herein may be implemented in a high level procedural or object oriented programming or scripting language, or a combination thereof, to communicate with or assist in the operation of a computer system, for example the computer(s). Alternatively, the methods and systems may be implemented in assembly or machine language. The language may be a compiled or interpreted language. Program code for implementing the methods and systems may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems may also be considered to be implemented by way of a non-transitory computer-readable storage medium having a computer program stored thereon. The computer program may comprise computer-readable instructions which cause a computer, or more specifically the processing unit of the computing device, to operate in a specific and predefined manner to perform the functions described herein.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The embodiments described herein are implemented by physical computer hardware, including computing devices, servers, receivers, transmitters, processors, memory, displays, and networks. The embodiments described herein provide useful physical machines and particularly configured computer hardware arrangements. The embodiments described herein are directed to electronic machines and methods implemented by electronic machines adapted for processing and transforming electromagnetic signals which represent various types of information. The embodiments described herein pervasively and integrally relate to machines, and their uses; and the embodiments described herein have no meaning or practical applicability outside their use with computer hardware, machines, and various hardware components. Substituting the physical hardware particularly configured to implement various acts for non-physical hardware, using mental steps for example, may substantially affect the way the embodiments work. Such computer hardware limitations are clearly essential elements of the embodiments described herein, and they cannot be omitted or substituted for mental means without having a material effect on the operation and structure of the embodiments described herein. The computer hardware is essential to implement the various embodiments described herein and is not merely used to perform steps expeditiously and in an efficient manner.

The technical solution of embodiments may be in the form of a software product. The software product may be stored in a non-volatile or non-transitory storage medium, which can be a compact disk read-only memory (CD-ROM), a USB flash disk, or a removable hard disk. The software product includes a number of instructions that enable a computer device (personal computer, server, or network device) to execute the methods provided by the embodiments.

While the description may present method and/or process steps as a particular sequence, it is understood that to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the description should not be construed as a limitation.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus. As used herein, the term "about" is intended to allow for a 10% variation of the associated numerical values.

While various aspects of the present disclosure have been disclosed, it will be apparent to those of ordinary skill in the art that many more embodiments and implementations are possible within the scope of the present disclosure. For example, the present disclosure as described herein includes several aspects and embodiments that include particular features. Although these particular features may be described individually, it is within the scope of the present disclosure that some or all of these features may be combined with any one of the aspects and remain within the scope of the present disclosure. References to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. The use of the indefinite article "a" as used herein with reference to a particular element is intended to encompass "one or more" such elements, and similarly the use of the definite article "the" in reference to a particular element is not intended to exclude the possibility that multiple of such elements may be present.

The embodiments described in this document provide non-limiting examples of possible implementations of the present technology. Upon review of the present disclosure, a person of ordinary skill in the art will recognize that changes may be made to the embodiments described herein without departing from the scope of the present technology. Other applications would be recognized by the person of ordinary skill in the art and are considered to be within the scope of the present disclosure. Yet further modifications could be implemented by a person of ordinary skill in the art in view of the present disclosure, which modifications would be within the scope of the present technology.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A method of monitoring operation of an aircraft engine, the method comprising:
during operation of the aircraft engine, monitoring a parameter associated with the aircraft engine using one or more sensors;
in response to determining that one or more values of the parameter are indicative of a foreign object damage (FOD) event of a first severity level to the aircraft engine, communicating data pertaining to the FOD event of the first severity level in accordance with a first communication scheme assigned to the first severity level, the first communication scheme specifying at least a first channel to be used and a first data type to be communicated over the first channel; and
in response to determining that one or more values of the parameter are indicative of FOD event of a second severity level to the aircraft engine, the second severity level being higher than the first severity level, communicating data pertaining to the FOD event of the second severity level in accordance with a second communication scheme assigned to the second severity level, the second communication scheme specifying:
a second channel in addition to the first channel, the second channel not used in the first communication scheme; and/or
a second data type to be communicated over the first channel, the second data type not communicated over the first channel in the first communication scheme.

2. The method of claim 1 wherein the first channel is a flight crew interface and the second channel is a wireless communication channel.

3. The method of claim 1 or 2 wherein the second channel is a data link.

4. The method of claim 1, 2 or 3 wherein the second channel is a health report.

5. The method of any preceding claim wherein the second channel is a wireless communication channel between an aircraft bearing the aircraft engine and airport authorities.

6. The method of any preceding claim wherein said communicating in accordance with the second communication scheme includes including a recommendation as to next steps.

7. The method of claim 6 further comprising generating the recommendation as to next steps using a generative neural network and the one or more values.

8. The method of claim 6 or 7 further comprising generating the recommendation as to next steps based on data pertaining to at least one of past engine events and outcomes to past engine events.

9. The method of any preceding claim wherein the one or more sensors include an accelerometer and the parameter is vibration.

10. The method of any preceding claim further comprising storing the one or more values in a non-transitory memory when the FOD event is detected.

11. The method of any preceding claim wherein said communicating includes displaying the first severity level and/or the second severity level of the FOD event on a cockpit display.

12. An aircraft engine comprising:
a sensor; and
a controller including a processor and a non-transitory machine-readable memory operatively connected to the processor, and storing:
specifications for a plurality of severity levels of foreign object damage (FOD) events;
multiple communication schemes for the FOD events, each communication scheme of the multiple communication schemes having a selected combination of:
one or more channels; and
one or more data types to be communicated over the one or more channels; and
instructions executable by the processor to cause the processor to:
measure one or more values of a parameter of the aircraft engine using the sensor;
detect an FOD event occurrence of based on the one or more values, and assign one of the plurality of severity levels based on the one or more values; and
communicate data pertaining to the FOD event occurrence in accordance with a communication scheme selected from the multiple communication schemes based on the assigned one of the plurality of severity levels,
optionally wherein the instructions to communicate data include instructions to display the severity level of the FOD event on a cockpit display.

13. The aircraft engine of claim 12 wherein the multiple communication schemes specify a first channel and a second channel, wherein the first channel is a flight crew interface connecting with a cockpit display, and the second channel is a wireless communication channel, optionally wherein:
the second channel is a wireless communication channel between an aircraft bearing the aircraft engine and airport authorities; and/or
the second channel is a data link; and/or
the second channel is a health report.

14. The aircraft engine of claim 12 or 13 wherein one of said data types is a recommendation as to next steps.

15. A method of operating an aircraft engine, the method comprising:
measuring one or more values of a parameter of the aircraft engine using one or more sensors;
detecting an occurrence of a foreign object damage (FOD) event having one of a plurality of severity levels based on the one or more values; and
communicating data pertaining to occurrence of the FOD event in accordance with a communication scheme including selecting the communication scheme from multiple communication schemes based on the severity level, each communication scheme of the multiple communication schemes having a selected combination of:
one or more channels; and
one or more data types to be communicated over the one or more channels.
